# EUROPEAN PATENT APPLICATION

(11) **EP 2 575 216 A2**
(43) Date of publication of application: **03.04.2013**
(21) Application number: 12184129.0
(22) Date of filing: 12.09.2012
(51) Int. Cl.: H01R 13/621, F16B 41/00

(54) **Securing apparatus for electrical connectors**

(30) Priority: 28.09.2011 GB 201116769
(71) Applicant: Harwin PLC, Portsmouth, Hampshire PO6 1RT (GB)
(72) Inventor: Flower, Scott, Portsmouth, Hampshire PO6 1RT (GB); McQuilken, Andrew, Portsmouth, Hampshire PO6 1RT (GB); Bennett, Sam, Portsmouth, Hampshire PO6 1RT (GB)
(74) Representative: Patel, Nikesh

(57) **Abstract**

A collar (20) for an electrical connector (30) is provided, wherein the collar is adapted to be pressed into a through hole (31) in a housing (33) of an electrical connector, the collar comprising: a base (21) defining an opening for receiving a fastening element (10); and retention means (24, 25) disposed in the path of insertion of a fastening element and engageable by the fastening element on insertion such that the fastening element causes the retention means to move in order to allow the fastening element to be inserted in a first direction through the opening in the collar but to prevent the retraction of the fastening element from the collar in a second direction opposite to the first. A fastening element for an electrical connector is also provided, comprising a shaft portion (11, 51) including a shoulder portion (15, 55) adapted to abut a retention means (25a) of a collar when inserted into the collar and to move the retention means on insertion. A securing mechanism for an electrical connector is also provided, the securing mechanism comprising the aforementioned collar and aforementioned fastening element. An electrical connector is further provided comprising: an electrical contact section for electrically mating with another electrical connector; and a mechanical locking means comprising the aforementioned collar and the aforementioned fastening element.

## Description

The present invention relates to a securing apparatus. In particular, the present invention relates to interconnection devices which include a securing apparatus to enable a secure connection to be made between two interconnection devices. The devices are preferably electrical connectors but can be other types of devices that need to be coupled.

Electrical interconnection devices are typically in the form of a male electrical connector which is adapted to be mated to a female electrical connector. The male connector normally has at least one electrical contact pin that is received in a socket in a female connector. In this manner, the male and female connectors cooperate with each other.

Once electrical connectors are mated they are typically held together by engagement forces that arise from the effect of a pin being squeezed in order to fit into a socket. Some types of miniature electrical connectors, such as D sub-miniature connectors which are used for serial connections to computers, include small screws (also known as jackscrews in the art) in one of the connectors that are received in corresponding receiving portions in the other connector. A user needs to align the jackscrew from one connector with the receiving portion of another connector and tighten in order to lock the D-type connectors together after mating.

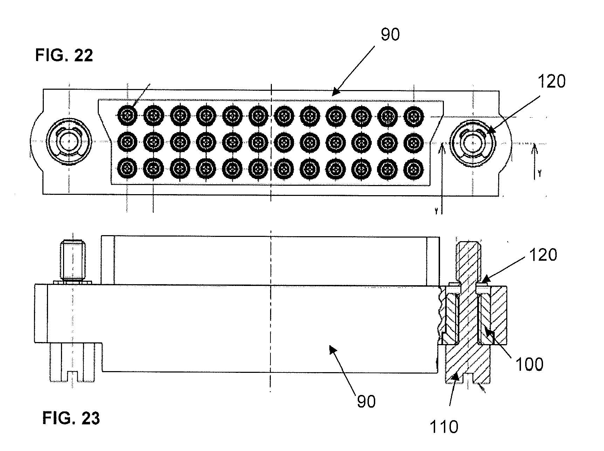

One such known connector 90 is shown in Figures 22 and 23. It comprises through holes to receive a mechanism to enable locking with another connector. The mechanism has a collar 100 which is retained in the connector 90 typically using a barb or knurl feature. The collar 100 has a female thread on the inner walls. A jackscrew 110 has a male thread on its outer surface and it is wound through the collar to engage with it. A circlip 120 which is a C-shaped retaining ring is clipped onto the jack screw 110 after the jackscrew 110 has been wound through the collar 100 to prevent the two threads engaging and undoing.

From a first aspect, the present invention provides a collar for an electrical connector, the collar comprising: a base defining an opening for receiving a fastening element; and retention means disposed in the path of insertion of a fastening element and engageable by the fastening element on insertion such that the fastening element causes the retention means to move in order to allow the fastening element to be inserted in a first direction through the opening in the collar but to prevent the retraction of the fastening element from the collar in a second direction opposite to the first.

The retention means may comprise a plurality of elements extending from the base member.

The retention means may further comprise at least one projection from one or more of the plurality of elements. The plurality of elements comprise inner walls that may be angled towards a central axis of the collar. The inner walls may angle towards the central axis through tapering or bending of the elements at the base. The collar can be pressed into a through hole in a housing of an electrical connector and is shaped so that a clearance exists between the inner wall of the through hole and the collar when the collar is in its default position without a cooperating fastening element in position.

From a second aspect, the present invention provides a fastening element comprising a shaft portion including a shoulder portion adapted to abut the retention means of the collar when inserted into the collar and to move the retention means on insertion. The fastening element may further comprise a head portion with a smaller diameter than the shaft portion and the shaft portion may extend longitudinally from the head portion.

From a third aspect, a securing mechanism for an electrical connector is provided, the securing mechanism comprising collar comprising: a base defining an opening for receiving a fastening element; and retention means disposed in the path of insertion of a fastening element and engageable by the fastening element on insertion such that the fastening element causes the retention means to move in order to allow the fastening element to be inserted in a first direction through the opening in the collar but to prevent the retraction of the fastening element from the collar in a second direction opposite to the first, the mechanism further comprising a fastening element comprising a shaft including a shoulder portion adapted to abut the retention means of the collar when inserted into the collar and to move the retention means on insertion.

This can advantageously provide a self locking mechanism for the fastening element which is preferably a jack screw in the collar, remove the need for an additional separate circlip to secure the jack screw, and improve retention of the collar and jack screw in the connector.

From a fourth aspect, an electrical connector is provided comprising: an electrical contact section for electrically mating with another electrical connector; and a mechanical locking means comprising the aforementioned collar and fastening element.

In order that the present invention be more readily understood, embodiments will be described by way of example with reference to the accompanying drawings in which:
Fig 1 shows a perspective view of a locking screw which forms part of a securing mechanism according to a first embodiment;
Fig 2 shows a view of the locking screw of Fig. 1 from one end;
Fig 3 shows a view of the locking screw of Fig. 1 from one side;
Fig 4 shows a view of a collar which forms another part of the securing mechanism according to the first embodiment from above;
Fig 5 shows a cross-section view of the collar taken along the line Y-Y in Fig. 4.
Fig. 6 shows a front view of an electrical connector that is provided with the securing mechanism of Figs. 1 to 5;
Fig. 7 shows a cross sectional view of the mechanical locking sections of the connector of Fig. 6 taken along the line C-C;
Fig. 8 shows a detailed view of the securing mechanism on the left of the connector in Fig. 7;
Fig. 9 shows a detailed view of the securing mechanism on the right of the connector in Fig. 7;
Fig. 10 shows a one perspective view of the arrangement in Fig. 6 and 7;
Fig. 11 shows another perspective view of the arrangement in Fig. 6 and 7;
Fig. 12 shows an alternative form of screw that could be used in the first embodiment;
Fig. 13 shows a perspective view of a locking screw which forms part of a securing mechanism according to a second embodiment;
Fig. 14 shows a perspective view of a collar which forms part of a securing mechanism according to a second embodiment;
Fig. 15 shows a cross sectional view of Fig. 14 taken along X-X;
Fig. 16 shows an end view of an electrical connector that is provided with the securing mechanism of Figs. 13 to 15;
Fig. 17 shows a top view of the connector in Fig. 16 with a cross section of the right hand securing mechanism only as taken along the line X-X of Fig. 16;
Fig. 18 shows a cross sectional view of Fig. 16 taken along Y-Y;
Fig. 19 shows a perspective view of the arrangement in Fig. 16 and 17;
Fig. 20 shows a perspective view of a collar which forms part of a securing mechanism according to a third embodiment;
Fig. 21 shows a cross sectional view of Fig. 20 taken along X-X;
Fig. 22 shows a view of a conventional electrical connector from one end; and
Fig. 23 shows a view of the connector in Fig. 22 from above with a cross section of the right hand securing mechanism only as taken along the line Y-Y.

A male securing mechanism is provided in an electrical connector to engage with a female securing mechanism which may be provided in another electrical connector. The electrical connector has a number of electrical contacts which can be electrically coupled to corresponding electrical connections in another connector. The male securing mechanism forms a mechanical locking section of the electrical connector. The male securing mechanism can be used in many different types of electrical connectors.

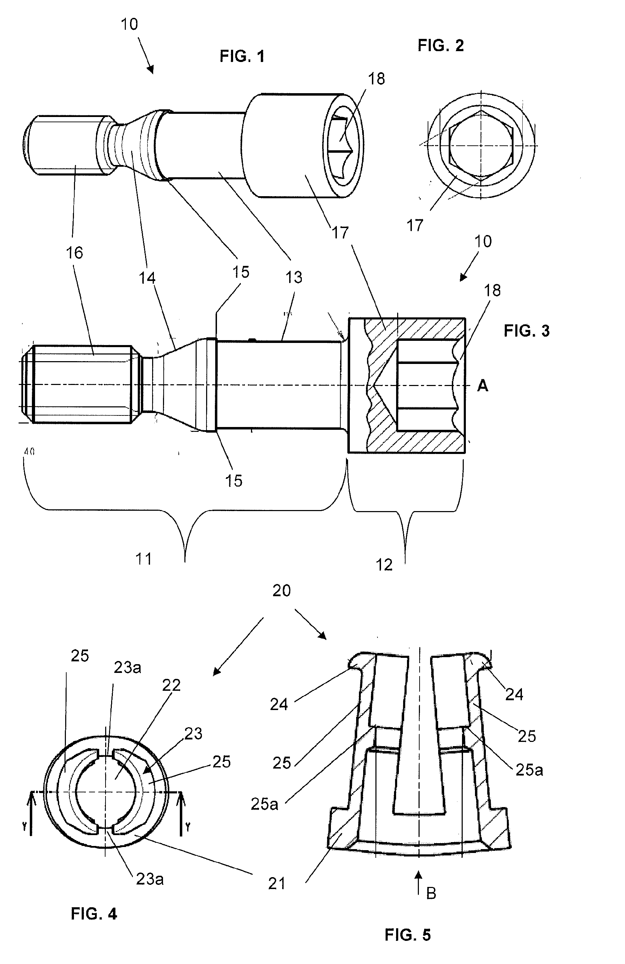

The male securing mechanism comprises an assembly as shown in Figures 1 to 12. The assembly includes a fastening member in the form of an unthreaded locking screw 10, a collar 20 that can receive the screw 10, the collar 20 being attachable to an electrical connector. In this embodiment, electrical connector is a female miniature electrical connector which will be described later.

The screw will be described in more detail referring to Fig. 3. The screw 10 is preferably made of metal such as stainless steel and is formed of a shaft portion 11 extending in a longitudinal direction from a head portion 12. In other embodiments, the screw could be made from various materials such as aluminium, steel, brass, copper, beryllium copper, or titanium or other similar materials.

The cross sectional shape of the shaft portion 11 is generally circular and the shaft portion 11 generally has a smaller diameter than the head portion 12 although the diameter may vary along the shaft portion 11.

The shaft portion 11 has a first cylindrical section 13 adjacent the head portion 12. A neck section 14 is provided adjacent the first cylindrical section 13 the other side to the head portion 12. The neck section 14 tapers towards a central longitudinal axis A of the screw 10. A shoulder 15 is formed where the first cylindrical section 13 and tapered neck section 14 meet since the cross sectional diameter of the tapered section 14 is larger than the first cylindrical section 13. The cross sectional diameter of the tapered section 14 at the shoulder is larger compared to the cross sectional diameter of the rest of the shaft portion 11.

The end of the shaft portion 11 distal the head portion 12 forms a thread section 16 which is substantially cylindrical and is to be received by a securing mechanism in another electrical connector. Although not shown, such a securing mechanism may include a recess for receiving the thread section.

The head portion 12 comprises a head 17 as a means for turning the screw. The screw head 17 includes a slot 18 to receive a tool (not shown) such as screwdriver and has a suitable surface around the edges of the screw head to enable gripping of the screw head.

Turning to the collar 20, it is shaped to allow the shaft portion 11 of the screw 10 to enter through a passageway in the collar 20 in a first direction B through an opening at one end of the collar 20 but to resist retraction of the screw 10 in the opposite direction.

In this embodiment, this is achieved by having a ring shaped element 21 which forms an opening 22 to receive the screw 10. An upstanding portion 23 extends in a direction away from the ring shaped element 21. The top of the upstanding portion 23 comprises a lip 24 extending radially outwards. The upstanding portion is substantially cylindrical and comprises cutaway passages or slots 23a arranged opposite each other thereby forming a plurality of opposing fingers 25. In this embodiment, there is a pair of opposing fingers 25 in the upstanding portion 23 but this could vary, for example, there could be more than one pair or an odd number of fingers that are not directly opposite each other. In this embodiment, the collar 20 is clenched during a turning process. This can be achieved, for example, by clamping the fingers 25, created by slots 23 a, in a fashion on a computer numerical control (CNC) sliding head turning machine to close or squeeze together the fingers to create a slight reduction in diameter as the upstanding portion 23 extends away from the ring shaped element 21. This squeezing action can also be achieved using a tapered sleeve brought over the collar 20 from above the upstanding portion 23 i.e. in the opposite direction to 'B'.

After clenching, the fingers 25 are slightly angled towards each other in their default position. The fingers 22 are inherently resilient to the extent that they can be pushed outwards by applying a force but will try to revert back to their default position. The collar material has spring back. By clenching or squeezing the fingers 25, the ring section 21 is also bowed to provide additional resistance to the fingers 25 being pushed outwards and assist in trying to return them to their default position of Fig. 5.

The internal surface of each finger 25 is provided with a ridged portion 25a which projects away from the internal surface. The ridged portion 25a is arranged to be abutted by the shaft portion of the screw 10.

The underside of each lip 24 at the end of each finger 25 abuts the edge of the hole preventing the collar being pulled out from the hole if the screw is pulled in a direction opposite to the direction of entry into the collar.

The collar 20 is preferably made of metal such as brass plated with nickel. In other embodiments, the collar could be made from various materials such as aluminium, steel, brass, copper, beryllium copper, or titanium or other similar materials. The materials may have some inherent spring properties but do not require significant spring properties for the collar to carry out the intended function.

The ridged portions 25a of the fingers 25 are moveable components disposed in the path of insertion of the screw 10 and engageable by shaft portion 11 of the screw 10 on insertion such that the shaft portion 11 causes the ridged portions 25a of each finger 25 to move in order to allow the shaft portion 11 of the screw 10 to be inserted in a first direction B through the opening 22 in the collar 20 but to permanently prevent the retraction of the shaft portion 11 from the collar 20 in a second direction opposite to the first.

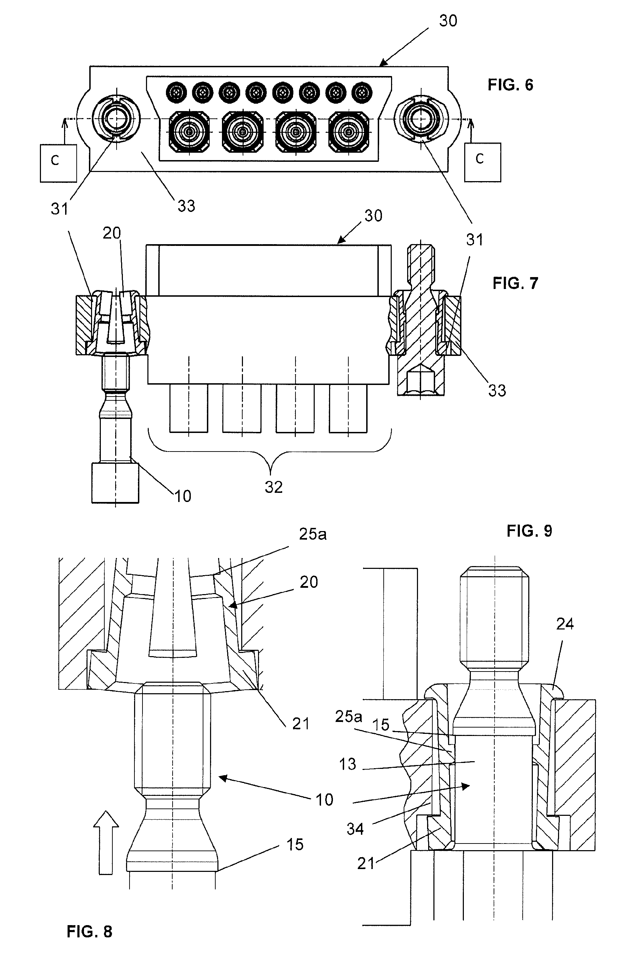

The collar 20 is suited for use with an electrical connector 30 such as that shown in Figs. 6 and 7. In such an electrical connector 30, through holes 31 are provided in the housing 33 of the connector 30 on either side of an electrical connecting section 32. The housing 33 is typically formed of plastics material. Each through hole 31 is the same and has a counterbore section that receives the ring shaped element 21. The cross sectional shape of the through holes 31 when viewed from the top of the connector (Fig. 7) is "T" shaped such that the diameter of the counterbore section is larger than the remaining section of the through hole 31. The size of the through hole 31 generally matches the cross sectional shape of the collar. However, the hole 31 is sized to provide a certain degree of clearance between the fingers 25 and the inner wall of the through hole 31, the significance of which is explained later.

The collar 20 is received in the through hole 31 of the electrical connector 30 and is positioned in its default position in the connector 30 as shown on the left side of Fig. 7 and shown in more detail in Fig. 8. Once the collar 20 is positioned in the electrical connector 30, the screw 10 is then pushed through the collar 20. The distance between the ridged portions 25a on either side of the collar 20 is less than the diameter of the neck section 14 at the shoulder 15 and an interference fit is provided between the screw 10 and the collar 20.. The shoulder 15 of the screw 10 is designed to move the ridged portion 25a of the collar 20 towards the internal side walls 34 of the hole 31 in the connector housing 33. Once the shoulder 15 passes the ridged portion 25a of the collar 20, the resilience of the collar 20 causes the ridged portion 25a to try to retain its default position and exerts a force on the cylindrical section 11 of the screw 10. However, it should be noted that the successful operation of the collar 20 does not rely on the spring properties of the material used for the collar 20. The collar 20 has a property that allows the part to deform without springing back. That is, the fingers 25 of the collar 20 are deformed once the screw 10 has passed through the ridged portion 25a thus providing a high strength, secure tamper proof solution.

As is apparent from Fig. 8 and 9, the edges of the ring shaped element 21 have a degree of flex and move towards the shaft portion 11 of the screw 10 as the screw 10 in inserted into the collar 20 and past the ridged portions 25a. On the other hand, the lips 24 move outwards so as to engage with the edge of the hole 31.

Once assembled the collar 20 and screw 10 can rotate effectively as a single item. The ridged portion 25a of the collar 20 continues to apply pressure to the cylindrical section 11 of the shaft portion i.e. behind the shoulder 15, to ensure that the collar 20 and screw 10 cannot separate easily.

Referring to the right side of Fig. 7 and Fig. 9, once the screw 10 has been pushed through the collar 20, it is permanently retained. After the shoulder 15 of the shaft 10 has passed the ridged portion 25a of the collar 20 it cannot be withdrawn along the axis in the opposite direction to which is was inserted while the collar 20 is positioned in the hole 31 in the connector housing 33. The clearance is not sufficient to enable the screw 10 to be withdrawn from the collar 20. It will be appreciated that the mechanism could be adjusted to provide enough clearance to reopen the collar's to move the ridged portion 25a in each finger 25 away from each other in order to release the screw 10. However, a pull on the screw 10 without any adjustment to the collar 20 will not release the screw 10 from the collar 20 providing an effective permanent retention.

The ridged portions 25a of the fingers 25 are considered moveable components disposed in the path of insertion of the screw 10 and engageable by shaft portion 11 of the screw 10 on insertion such that the shaft portion 11 causes the ridged portions 25 a of each finger 25 to move in order to allow the shaft portion 11 of the screw 10 to be inserted into the collar 20 in a first direction through the opening 22 in the collar but to permanently prevent the retraction of the shaft portion 11 from the collar 20 in a second direction opposite to the first.

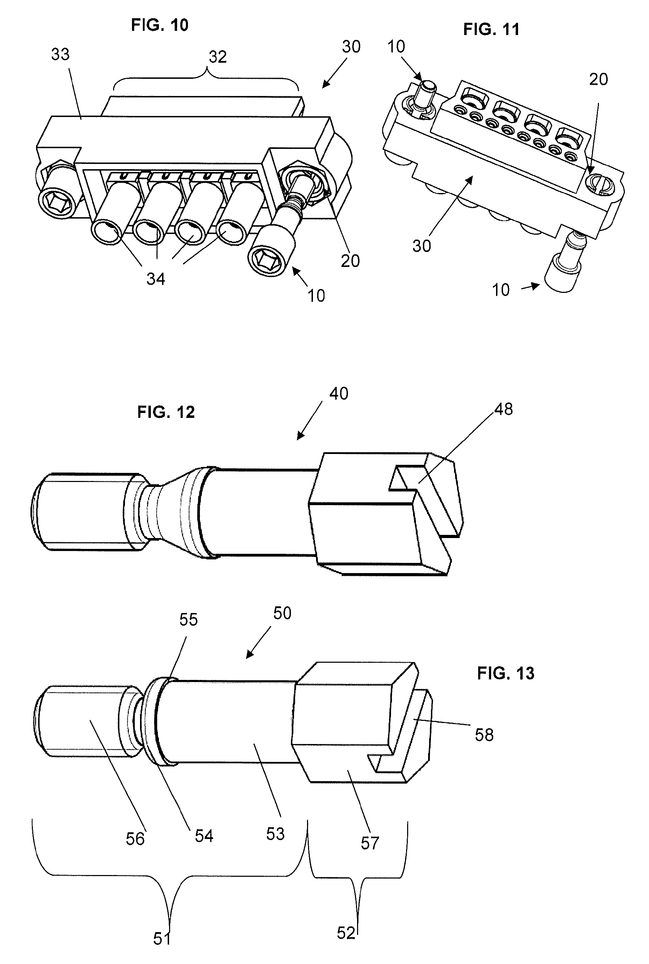

Additional views of the screw 10 being inserted into the collar 20 and having been inserted into the collar 20 are provided in Figs 10 and 11. This figure also shows four electrical sockets 34 formed in the electrical connecting section 32 of the connector 30. It will be appreciates that number of electrical sockets and the electrical connecting section may vary.

The head portion of the screw can be of various styles. In this embodiment, the head portion is a socket head 18.

In other embodiments, other head styles could be used such as a slotted or cross head. In particular, the head portion could be Torx(RTM), Star Drive Security, Philips, Pozi drive or Clutch Head Security style.

Figure 12 shows another screw 40 which has a slotted head 48. Otherwise, the screw has similar features to that shown in Figure 1 and can be used with the collar 20.

In a modified embodiment, a variation to the screw in Figure 1 is used. Referring to Figure 13, a screw 50 is shown. The screw 50 is similar to the screw 10 in that it is formed of a shaft portion 51 extending in a longitudinal direction and a head portion 52. The shaft portion 51 also has a generally circular cross sectional shape. The shaft portion 51 has a first cylindrical section 53 adjacent the head portion 52. The screw 50 differs to that of figure 1 in that it has a smaller neck section 54 adjacent the first cylindrical section 53 the other side to the head portion 52. Nevertheless, a shoulder 55 is formed where the first cylindrical section 53 and neck section 54 meet since the cross sectional diameter of the neck section 54 is larger than the first cylindrical section 53. The cross sectional diameter of the neck section 54 at the shoulder 55 is larger compared to the cross sectional diameter of the rest of the shaft portion 51.

In this embodiment, the shoulder 55 may be relatively further away from the hard section 52 and along the cylindrical section compared to the screw in Figure 1 or 12.

The end of the shaft portion 51 distal the head portion 52 forms a thread section 56 similar to that in Figures 1 and 12.

The head portion 52 comprises a head 57 as a means for turning the screw. The screw head 57 includes a slot 58 similar to similar to that in Figure 12.

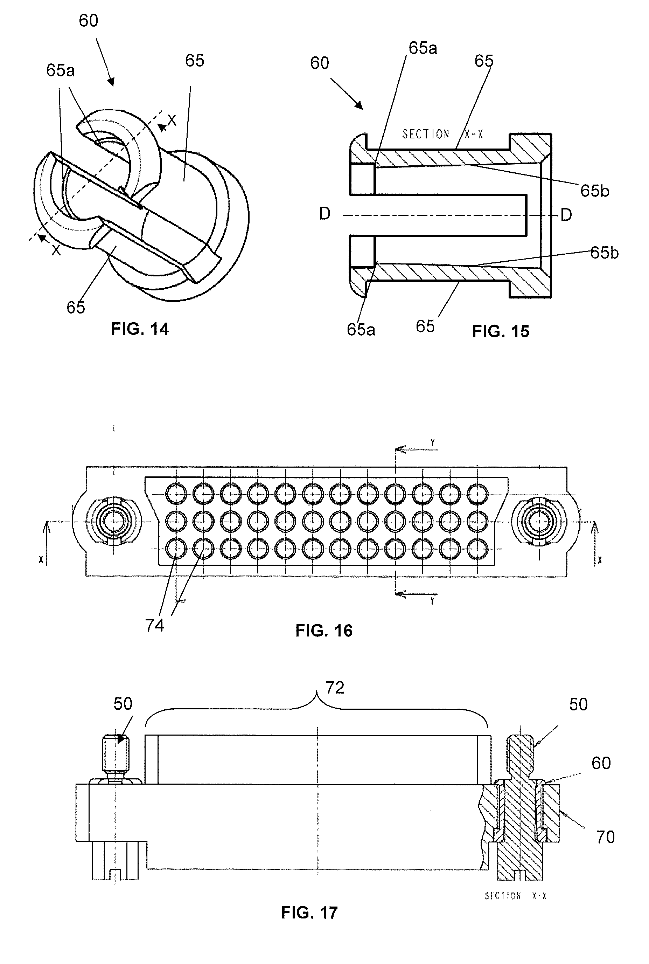

Referring to Figures 14 and 15, a collar 60 is provided for use with the screw 50. The collar 60 is similar to that in Figures 4 and 5 except that ridged portions 65a are formed further along fingers 65 than in the collar 20 and clenching is not required. This is an alternative profile to Fig.4 and 5. The shoulder 55 is positioned further along the shaft portion 51 of the screw 50 than in screw 10.

Fig. 13 and 15 refer to an alternative collar and jackscrew profile that does not require clenching. This design utilises a tapered hole to generate ridged portions 65a. The tapered hole is created by tapering the inner wall 65b of each finger 65 inwards (towards each other and the central axis D) until a point where a ridge is to be created. At this point in the finger 65, the inner wall of each finger extends radially outwards away from the central axis D such that a planar surface is created. At this point, the inner walls extend upwards in a parallel direction to each other thereby creating a ridged portion 65b. Once the screw 50 has been pushed through the collar 60, it is permanently retained by the ridged portions 65a and shoulder 55. After the shoulder 55 adjacent the cylindrical section 53 of the shaft portion 51, has passed the ridged portion 65a of the collar 60, it cannot be withdrawn along the axis in the opposite direction to which is was inserted while the collar 60 is positioned in a through hole in a connector housing. The clearance is not sufficient to enable the screw 50 to be withdrawn from the collar 60. It will be appreciated that the mechanism could be adjusted to provide enough clearance to reopen the collar's to move the ridged portion 65a in each finger 65 away from each other in order to release the screw 50. However, a pull on the screw 50 without any adjustment to the collar 60 will not release the screw 50 from the collar 60 providing an effective permanent retention. Collar 60 and screw 50 tolerances are such that the diameter of section 53 of screw 50 will always be larger that diameter 65a of collar 60. This means that collar 60 is always pressing on the screw and as in Fig. 7 and 9.

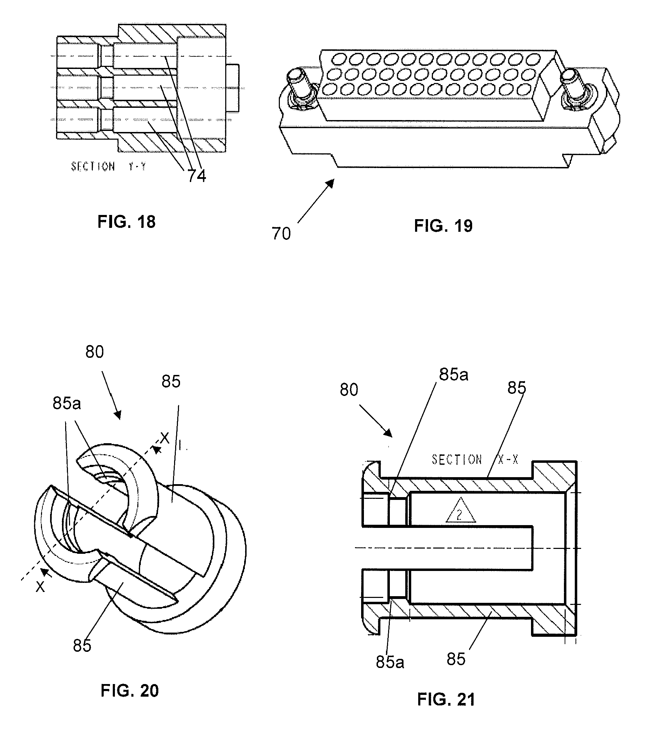

The screw 50 and collar 60 can be used in a connector 70 as shown in Figures 16 to 19. The connector 70 is similar to those described previously in that two through holes are provided in order to receive a collar 60 and screw 50 that forms a securing mechanism. The connector 70 differs in the electrical connecting section 72 to previously described connectors. A plurality of electrical contacts 74 (thirty six).

In another embodiment, instead of collar 60 in Figures 14 and 15, another collar 80 can be provided. This collar 80 has fingers 85a upstanding from a ring shaped element that defines an opening to receive the screw 50. Again, clenching is not required. Ridged portions 85a are provided on the fingers 85 but the portions 85a project further radially inwards forming longer projections than in the clenched collar of figure 5. The distance between the inner surfaces of the ridged portion 85a is less than the diameter of the cylindrical section 53 of the shaft 50. As with the previous embodiment, the arrangement is such that the collar 80 is always pressing on the screw 50.

It will be appreciated that the male securing mechanism could be used with different types of electrical connector where electrical mating and mechanical locking are provided separately. The mechanism would be able to be secured to different types of cooperating female securing mechanisms that are currently available.

With the male securing mechanism mentioned hereinbefore, the traditional need for a circlip is removed and improved push out forces from the connector housing are provided. By push out forces it is meant force applied directly opposite direction B when "jacking apart" connectors. By undoing the jackscrews, conventionally counter-clockwise but this could be clockwise for a left-handed tread, a force is generated to push apart mated male and female connectors. This generates forces on the collars of the assembly due to trying to overcome the withdrawal forces of the male pin in the male mouldings from the female clip in the female connector assembly. In one test, over 300Newtons was directly applied on to the jackscrews in the opposite direction to B (by trying to pull out the jackscrew) and this caused shearing to the lips (24 in Fig.5) on the collar before the collar could be removed. This is about three times more force than is required to push a conventional assembly with a circlip.

The mechanism also lends itself to automatic assembly methods. A machine can be used to position the clenched collar into the connector housing and then push the screw through the collar.

Furthermore, the male securing mechanism can be used in items where a self-locking screw is required.

In addition to the embodiments of the invention described in detail above, the skilled person will recognize that various features described herein can be modified and combined with additional features, and the resulting additional embodiments of the invention are also within the scope of the accompanying claims.

## Claims

1. A collar for an electrical connector, the collar comprising: a base defining an opening for receiving a fastening element; and retention means disposed in the path of insertion of a fastening element and engageable by the fastening element on insertion such that the fastening element causes the retention means to move in order to allow the fastening element to be inserted in a first direction through the opening in the collar but to prevent the retraction of the fastening element from the collar in a second direction opposite to the first, wherein the collar is adapted to be pressed into a through hole in a housing of the electrical connector.

2. The collar of claim 1 wherein the retention means comprises a plurality of elements extending from the base.

3. The collar of claim 2 wherein the retention means further comprises at least one projection from one or more of the plurality of elements.

4. The collar of claim 2 or 3 wherein the plurality of elements comprise inner walls that are angled towards a central axis of the collar.

5. The collar of claim 4 wherein the inner walls are angled towards the central axis through tapering or bending of the elements at the base.

6. The collar of any preceding claim, wherein the collar is shaped so that a clearance exists between an inner wall of the through hole and the collar when the collar is in its default position without a cooperating fastening element in position.

7. A fastening element for an electrical connector, comprising a shaft portion including a shoulder portion adapted to abut a retention means of a collar when inserted into the collar and to move the retention means on insertion.

8. The fastening element of claim 7 further comprising a head portion, wherein the shaft portion has a smaller diameter than the head portion.

9. The fastening element of claim 7 or 8 wherein the shaft portion extends longitudinally from the head portion.

10. The fastening element of claim 8 or 9, wherein the shaft portion has a first cylindrical section adjacent the head portion and a neck section adjacent the first cylindrical section the other side to the head portion.

11. The fastening element of claim 10 wherein the neck portion tapers towards a central longitudinal axis of the fastening element.

12. The fastening element of claim 11 wherein the shoulder portion is formed where the first cylindrical section and the neck portion meet.

13. The fastening element of claim 12 wherein the cross sectional diameter of the neck portion at the shoulder portion is larger than the first cylindrical section.

14. A securing mechanism for an electrical connector, the securing mechanism comprising collar comprising: a base defining an opening for receiving a fastening element; and retention means disposed in the path of insertion of a fastening element and engageable by the fastening element on insertion such that the fastening element causes the retention means to move in order to allow the fastening element to be inserted in a first direction through the opening in the collar but to prevent the retraction of the fastening element from the collar in a second direction opposite to the first, wherein the collar is adapted to be pressed into a through hole in a housing of the electrical connector, the mechanism further comprising an a fastening element comprising a shaft portion including a shoulder portion adapted to abut the retention means of the collar when inserted into the collar and to move the retention means on insertion.

15. An electrical connector comprising: an electrical contact section for electrically mating with another electrical connector; and a mechanical locking means comprising the collar of any of claims 1 to 6 and the fastening element of any of claims 7 to 13.
